# FASCICULE DE BREVET EUROPEEN

(11) **EP 0 780 289 B1**
(45) Date de publication et mention de la délivrance du brevet: **19.05.1999**
(21) Numéro de dépôt: 96402688.4
(22) Date de dépôt: 11.12.1996
(51) Int. Cl.: B62M 3/08

(54) **Pédale automatique de cycle**
Automatisches Pedal für Fahrrad
Automatic pedal for bicycle

(30) Priorité: 18.12.1995 FR 9514952
(43) Date de publication de la demande: 25.06.1997
(73) Titulaire: Look Cycle, 58000 Nevers (FR)
(72) Inventeur: Peyre, Henri, 58270 Saint Benin D'Azy (FR)
(74) Mandataire: Boutin, Antoine

(56) Documents cités:
- EP-A- 0 359 845
- EP-A- 0 393 586
- DE-U- 9 000 984

## Description

L'invention est relative à une pédale automatique de cycle, en particulier pour la pratique du cyclisme sur route et du VTT (vélo tout terrain).

On connaît des pédales appelées à coopérer avec des chaussures de cycliste munies chacune d'un dispositif de fixation. Ces pédales réalisées en matière plastique ou en alliage léger sont montées rotatives sur un levier de pédalier par des flasques latéraux et s'étendent au-dessous d'une plaque d'appui sur laquelle la chaussure est appelée à venir en pression. Cette plaque d'appui est ajourée en vue d'alléger la pédale au maximum, et comporte généralement à l'avant un plot de guidage et une griffe fixe dotée d'une échancrure d'accrochage. Ces plot et griffe sont adaptés pour se loger dans une glissière axiale de la chaussure en vue d'assurer une fonction de guidage préalablement à l'accrochage. A l'arrière de la plaque d'appui sont disposées deux griffes mobiles situées latéralement en regard l'une de l'autre, de part et d'autre de la pédale. Ces griffes sont appelées à coopérer avec des joues d'accrochage de la chaussure et sont dotées à cet effet d'échancrures d'accrochage aux faces de contact approximativement longitudinales conjuguées desdites joues. Ces griffes sont associées à un moyen élastique du genre ressort transversal qui les relient et les sollicitent dans le sens du rapprochement de leur échancrure d'accrochage, de manière qu'une pression de la partie arrière du pied sur la pédale provoque un escamotage des griffes arrières et un accrochage de ces griffes solidarisant la chaussure avec la pédale. On connaît une tele pédale du document DE-AU-9000984.

Ces pédales automatiques de type connu donnent généralement satisfaction, mais présentent l'inconvénient d'une plage de réglage de la force du ressort très étroite, de sorte que le cycliste éprouve des difficultés à obtenir rapidement un réglage optimal reproductible adapté à sa morphologie.

Un but de l'invention est de perfectionner les pédales automatiques, en augmentant la sensibilité de la plage de réglage du moyen élastique coopérant avec les griffes arrières de la pédale automatique.

Un autre but de l'invention est de permettre un réglage simultané des deux côtés de la pédale automatique, dans le cas d'une pédale automatique dite "réversible", c'est-à-dire présentant deux faces d'enclenchement.

L'invention a pour objet une pédale automatique de cycle, du type comportant une conformation fixe d'enclenchement avant pour enclencher l'extrémité avant d'un taquet fixé sur une chaussure de cycliste et une conformation mobile arrière pour enclencher l'extrémité arrière dudit taquet fixé sur ladite chaussure de cycliste; ladite conformation mobile étant précontrainte par un moyen élastique de manière déplaçable sous la pression de la chaussure de cycliste entre une position ouverte d'écartement permettant l'insertion du taquet entre les deux conformations d'enclenchement et une position fermée d'enclenchement assurant la solidarisation du taquet et de la chaussure avec la pédale automatique, caractérisée en ce que le moyen élastique est un moyen à compression d'un bloc d'élastomère ou de matière résiliente analogue entre deux parois déplaçables l'une par rapport à l'autre pour permettre le réglage de l'effort d'enclenchement du taquet sur la pédale.

Un avantage remarqué de l'invention est de fournir plusieurs possibilités pour installer le système de réglage de la dureté de déclenchement. Ce système de réglage peut comprimer le bloc d'élastomère par plusieurs côtés, ce qui est avantageux pour la construction de la pédale.

Selon d'autres caractéristiques de l'invention :
- la pédale est une pédale réversible comportant deux faces d'enclenchement ;
- la compression du bloc d'élastomère est effectuée sensiblement parallèlement à l'axe de montage de la pédale automatique sur le levier de pédalier ;
- la compression du bloc d'élastomère est effectuée transversalement, de préférence sensiblement perpendiculairement à l'axe de montage de la pédale automatique sur le levier de pédalier ;
- la compression est effectuée sur un bloc plein d'élastomère entre deux parois parallèles dont l'une est fixe par rapport à la pédale automatique et dont l'autre est déplaçable par actionnement d'une vis ou organe analogue de réglage de l'effort d'enclenchement ;
- la compression est effectuée sur un bloc percé d'élastomère entre deux parois parallèles dont l'une est solidaire de la conformation mobile d'enclenchement à l'arrière de la pédale automatique et dont l'autre est mobile par rapport à la pédale automatique, et au moins une vis ou organe analogue de réglage de l'effort d'enclenchement traverse le bloc percé d'élastomère et assure sa compression par rapprochement ou éloignement des deux parois ;
- un organe mobile est en appui sur une paroi déplaçable comprimant l'élastomère ou matière résiliente analogue pour assurer le réglage de l'effort d'enclenchement ;
- un organe mobile, par exemple une vis coopère avec une conformation coopérante, par exemple un écrou d'une paroi déplaçable comprimant l'élastomère ou matière résiliente analogue pour déplacer directement cette paroi déplaçable ;
- la pédale comporte deux blocs d'élastomère, chaque bloc d'élastomère étant prévu pour déterminer l'effort d'enclenchement de chaque face d'enclenchement et la pédale comporte un moyen unique de réglage assurant simultanément sensiblement le même taux de compression de chaque bloc d'élastomère ;
- le moyen unique de réglage comporte un étrier à deux extrémités dont chacune et en appui sur une paroi de compression d'un bloc d'élastomère correspondant ;
- ledit étrier à deux extrémités est déplaçable sous l'action d'une vis de réglage en appui central sur l'étrier ;
- le bloc d'élastomère ou de matière résiliente analogue est comprimé selon une première direction par le déplacement desdites deux parois latérales et se dilate dans une deuxième direction sensiblement transversale à ladite première direction en exerçant un appui élastique sur un élément formant levier de la conformation d'enclenchement arrière ;
- le bloc d'élastomère est un bloc sensiblement parallélépipédique placé dans un logement de la pédale délimité par une paroi déplaçable de compression et une paroi solidaire de l'élément formant levier de la conformation d'enclenchement arrière ;
- le bloc d'élastomère ou de matière résiliente analogue est comprimé par le déplacement des deux parois latérales selon une direction sensiblement parallèle au déplacement d'une paroi solidaire de la conformation mobile d'enclenchement arrière ;
- la conformation mobile d'enclenchement arrière présente une section transversale en U dont une branche constitue une paroi au contact du bloc d'élastomère et dont l'autre branche constitue une griffe de retenue de taquet ;
- la conformation mobile d'enclenchement arrière présente une ouverture avec deux bords opposés constituant des butées de réglage de l'effort d'enclenchement ;
- la paroi déplaçable opposée à la paroi de la conformation en U au contact du bloc d'élastomère est repérable en position de manière reproductible, de manière à fournir un réglage reproductible de l'effort d'enclenchement ;
- la paroi déplaçable opposée à la paroi de la conformation en U au contact du bloc d'élastomère présente une extrémité qui s'engage dans ladite ouverture en étant visible de l'extérieur ;
- ladite extrémité est repérable par rapport à une échelle graduée adjacente, solidaire de ladite ouverture ;
- le bloc d'élastomère ou matière résiliente présente une caractéristique de dureté élevée supérieure à 70 Shore A, de manière à mettre la conformation mobile d'enclenchement constamment sous forte précontrainte sans que le bloc élastomère ne s'échauffe excessivement.

L'invention sera mieux comprise grâce à la description qui va suivre donnée à titre d'exemple non limitatif en référence aux dessins annexés dans lesquels :
La figure 1 représente schématiquement une vue en coupe selon la ligne I-I de la figure 3 d'une pédale automatique selon l'invention en position d'effort d'enclenchement maximal.
La figure 2 représente schématiquement une vue en coupe selon la ligne I-I de la figure 3 d'une pédale automatique selon l'invention en position d'effort d'enclenchement minimal.
La figure 3 représente schématiquement une vue dans le sens de la flèche III de la figure 1 d'une pédale automatique selon l'invention.
La figure 4 représente schématiquement une vue en coupe selon la ligne IV-IV de la figure 2 d'une pédale automatique selon l'invention.
La figure 5 représente schématiquement une vue en coupe axiale par un plan de symétrie longitudinal d'une autre pédale automatique selon l'invention.
La figure 6 représente schématiquement une vue de dessus dans le sens de la flèche VI de la figure 7 d'une pédale automatique selon l'invention.
La figure 7 représente schématiquement une vue en bout dans le sens de la flèche VII des figures 5 et 6 d'une pédale automatique selon l'invention.
La figure 8 représente schématiquement une vue en coupe transversale selon la ligne VIII-VIII des figures 5 et 6 d'une pédale automatique selon l'invention.
La figure 9 représente une vue partielle agrandie dans le sens de la flèche IX-IX des figures 6, 7 et 8 d'une pédale automatique selon l'invention illustrant le réglage d'effort d'enclenchement.

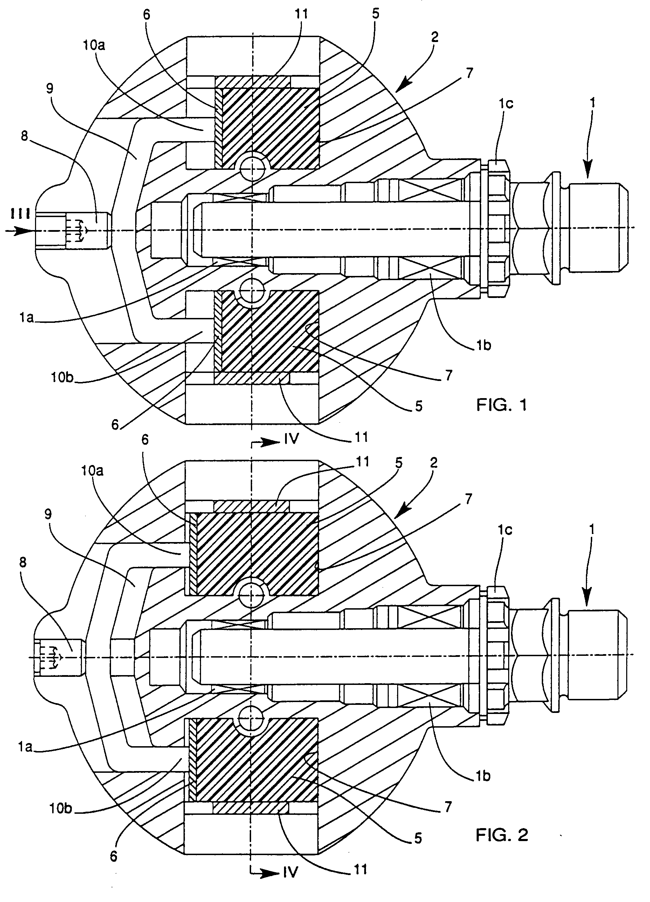

En référence aux figures 1 à 4, une pédale automatique selon l'invention comporte un axe 1 de montage de la pédale automatique sur un levier de pédalier non représenté, un corps principal 2 avec une conformation d'enclenchement 3 fixe par rapport au corps et une conformation d'enclenchement mobile 4 déplaçable et précontrainte par un moyen élastique 5.

De manière connue, les pédales automatiques de cycle comportent généralement la conformation fixe d'enclenchement 3 à l'avant pour enclencher l'extrémité avant d'un taquet fixé sur une chaussure de cycliste et la conformation 4 mobile d'enclenchement à l'arrière pour enclencher l'extrémité arrière dudit taquet fixé sur ladite chaussure de cycliste. La conformation mobile arrière précontrainte par le moyen élastique 5 est déplaçable sous la pression de la chaussure du cycliste entre une position ouverte d'écartement permettant l'insertion du taquet entre les deux conformations 3 et 4 et une position fermée d'enclenchement assurant la solidarisation du taquet et de la chaussure avec la pédale automatique.

Selon l'invention, le moyen élastique comporte un bloc d'élastomère 5 ou de matière résiliente analogue comprimée de manière reproductible entre deux parois 6 et 7 déplaçables l'une par rapport à l'autre pour permettre le réglage de l'effort d'enclenchement du taquet sur la pédale.

L'invention s'applique aux pédales simples comportant une seule face d'enclenchement, mais s'applique également et de préférence aux pédales réversibles comportant deux faces d'enclenchement, dont un exemple est représenté aux figures 1 à 4.

Dans les pédales réversibles de type connu, il est usuel de constituer l'axe 1 de montage de la pédale automatique sur le levier de pédalier démontable comprenant un palier à aiguilles la et un roulement 1b, et un écrou de blocage 1c, ainsi que de constituer les conformations fixes 3 d'enclenchement sous forme de deux pièces en tôle recourbée à l'avant fixées l'une à l'autre à travers le corps 2 par des organes 3a appropriés. Cette disposition connue impose l'usinage de logements, de perçages et de taraudages correspondants dans le corps 2 et ne nécessite pas de description plus détaillée.

Dans ce mode de réalisation de l'invention, la compression du bloc élastomère 5 est effectué par le déplacement de la surface 6 sensiblement parallèlement à l'axe de montage 1 de la pédale automatique sur le levier de pédalier. Le bloc 5 d'élastomère est un bloc plein compris entre les deux parois parallèles 6 et 7 ; la paroi 7 est fixe par rapport au corps 2 de la pédale automatique et la paroi 6 est déplaçable par actionnement d'une vis 8 de réglage de l'effort d'enclenchement.

A cet effet, la vis de réglage 8 appuie sur un étrier 9, et l'étrier 9 appuie lui même sur les surfaces 6 déplaçables pour comprimer le bloc d'élastomère 5. Avantageusement, dans le cas d'une pédale réversible, on prévoit deux blocs 5 d'élastomère et la pédale comporte un moyen unique de réglage assurant simultanément sensiblement le même taux de compression de chaque bloc 5 d'élastomère de chaque face d'enclenchement. Dans l'exemple représenté, le moyen unique de réglage comporte la vis de réglage 8 appuyant en position centrale sur l'organe 9 conformé en étrier. Les extrémités opposées 10a, 10b de l'étrier 9 appuient chacune sur une surface déplaçable 6 de compression d'élastomère. Ainsi, du fait de l'appui central de la vis 8 de réglage sur l'étrier 9, le déplacement imposé par les extrémités 10a et 10b de l'étrier 9 aux surfaces 6 de compression d'élastomère est sensiblement identique, de sorte que le bloc d'élastomère comprimé dans des conditions sensiblement identiques transmet à chaque conformation mobile 4 d'enclenchement des efforts d'enclenchement sensiblement identiques.

Chaque bloc 5 d'élastomère est comprimé selon une direction parallèle à l'axe 1 par le déplacement de chaque paroi latérale 6 et se dilate dans une direction sensiblement transversale à l'axe 1 en exerçant un appui élastique sur un élément 11 formant levier de la conformation 4 d'enclenchement arrière. Pour effectuer le montage de la pédale automatique selon l'invention, on place tout d'abord les blocs 5 sensiblement parallélépipédiques dans des logements correspondants du corps 2 limités par une paroi solidaire de l'élément 11 formant levier de la conformation 4 d'enclenchement arrière ; on insère les surfaces de compression 6 par une fente appropriée du logement pratiqué dans le corps 2 et on exerce un appui par l'intermédiaire de ces surfaces 6 sur les blocs 5 d'élastomère à l'aide de l'étrier 9 et de la vis 8, comme représenté à la figure 2 correspondant à l'effort d'enclenchement minimal. On serre ensuite la vis 8 pour comprimer les blocs d'élastomère 5 simultanément grâce à l'étrier 9 et aux surfaces 6 jusqu'à une position correspondant à un effort d'enclenchement souhaité, inférieur à l'effort d'enclenchement maximal correspondant à la position de la figure 1.

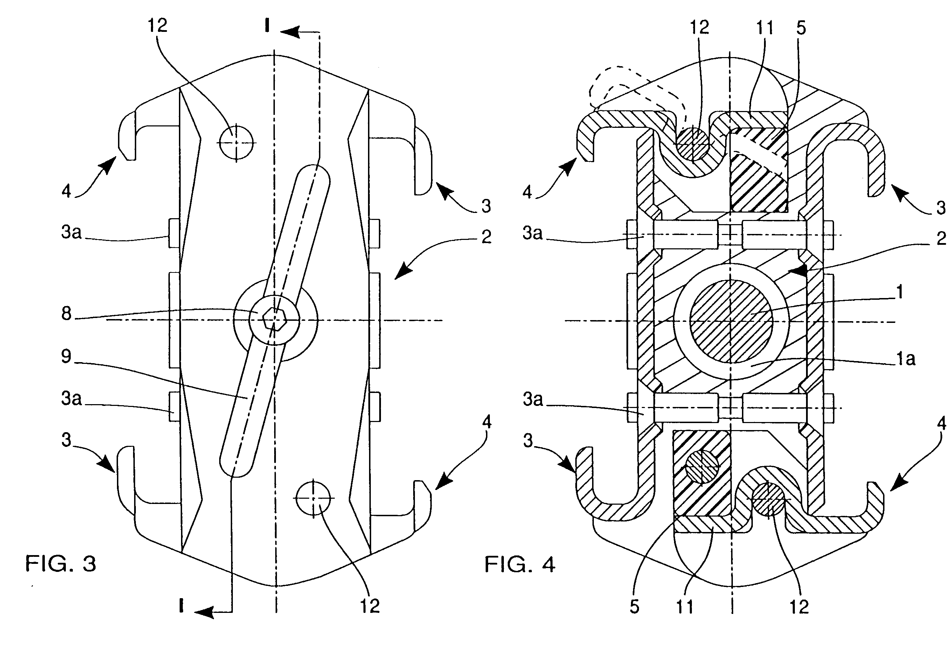

De préférence, l'extrémité 11 formant levier de la conformation mobile d'enclenchement est réalisée d'une seule pièce avec celle-ci, par exemple par pliage d'une tôle en acier approprié pour obtenir la section représentée à la figure 4 : cette section comporte deux extrémités sensiblement droites, dont l'une porte la griffe d'enclenchement, reliées entre elles par une partie semi-circulaire pivotant autour d'un axe 12 solidaire du corps 2.

Le pivotement de la conformation 4 autour de l'axe 12 s'effectue entre une position représentée en traits pointillés sur la figure 4 et correspondant à une position ouverte d'écartement permettant l'intersection du taquet de la chaussure de cycliste entre les deux conformations 3 et 4 d'enclenchement et une position fermée d'enclenchement représentée en traits pleins et assurant la solidarisation du taquet et de la chaussure avec la pédale automatique.

Les axes 12 de pivotement sont de préférence montés coulissants dans des logements du corps 2, de manière à faciliter le montage successif des blocs d'élastomère 5, des conformations 4 et de leur levier 11, des axes 12, des surfaces de compression 6 et des organes d'appui 9 et 8.

L'avantage de ce mode de réalisation est de fournir une transmission d'effort sur deux surfaces perpendiculaires et de mettre la conformation d'enclenchement 4 constamment sous une forte précontrainte en utilisant un bloc d'élastomère ou de matière résiliente présentant une caractéristique de dureté élevée supérieure à 70 Shore A, ce qui a pour effet d'éviter tout échauffement excessif du bloc d'élastomère qui ne travaille pratiquement pas lorsque le taquet est enclenché et retenu sur la pédale.

En outre, l'usure des deux blocs 5 est sensiblement identique, du fait de l'équilibrage d'effort réalisé par les surfaces 6 de compression par l'intermédiaire de l'étrier 9 transmettant les efforts de manière équilibrée d'une extrémité 10a à l'autre extrémité 10b.

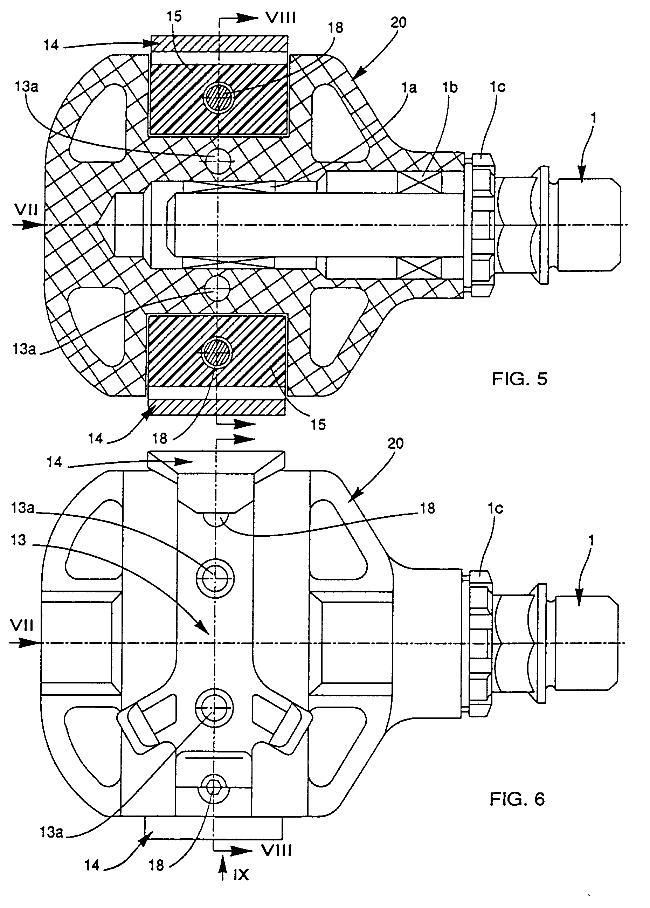

En référence aux figures 5 à 9, un deuxième mode de réalisation de pédale automatique selon l'invention comporte un axe 1 de fixation de la pédale automatique sur un levier de pédalier, réalisé de préférence sous forme d'un axe avec des paliers 1a, 1b et un écrou de fixation 1c, un corps 20 présentant des évidements pour alléger la pédale automatique, une conformation fixe 13 d'enclenchement et une conformation mobile 14 d'enclenchement aptes à s'écarter pour solidariser un taquet de chaussure avec la pédale automatique.

La conformation mobile 14 d'enclenchement est précontrainte par un moyen élastique comprenant un bloc d'élastomère 15 comprimé entre deux surfaces 16 et 17 déplaçables l'une par rapport à l'autre pour permettre le réglage de l'effort d'enclenchement du taquet sur la pédale.

Dans le cas d'une pédale réversible, les deux conformations fixes 13 sont montées sur les deux faces d'enclenchement opposées et solidarisées l'une à l'autre par des organes 13a correspondants, tandis que les conformations mobiles 14 d'enclenchement sont chacune montées prisonnières au contact de chaque bloc d'élastomère ou matière résiliente analogue 15 correspondant.

La compression du bloc élastomère 15 est ainsi effectuée transversalement, de préférence sensiblement perpendiculairement à l'axe de montage de la pédale automatique sur le levier de pédalier. Cette disposition permet de réduire la largeur de la pédale automatique et de fournir une réalisation plus légère et plus compacte. Le bloc d'élastomère 15 est percé et est comprimé entre parois parallèles 16 et 17. La paroi 16 est solidaire de la conformation mobile 14 d'enclenchement à l'arrière de la pédale automatique et la conformation 17 est mobile par rapport à la pédale automatique et comporte un taraudage ou un écrou 17a coopérant avec une vis de réglage 18 pour déplacer directement cette paroi déplaçable 17 en comprimant l'élastomère 15. Dans le cas d'une pédale réversible, les vis de réglage 18 comportant une empreinte hexagonale ou une fente à l'une et/ou à l'autre extrémité de la vis ne sont pas commandées par un moyen unique de réglage, de sorte qu'il est possible de régler indépendamment l'une ou l'autre face d'enclenchement de la pédale automatique. Pour reconnaître la face sur laquelle un réglage prédéterminé a été effectué, il est avantageux de prévoir un marquage ou une différence de coloris permettant de reconnaître une face d'enclenchement par rapport l'autre face d'enclenchement.

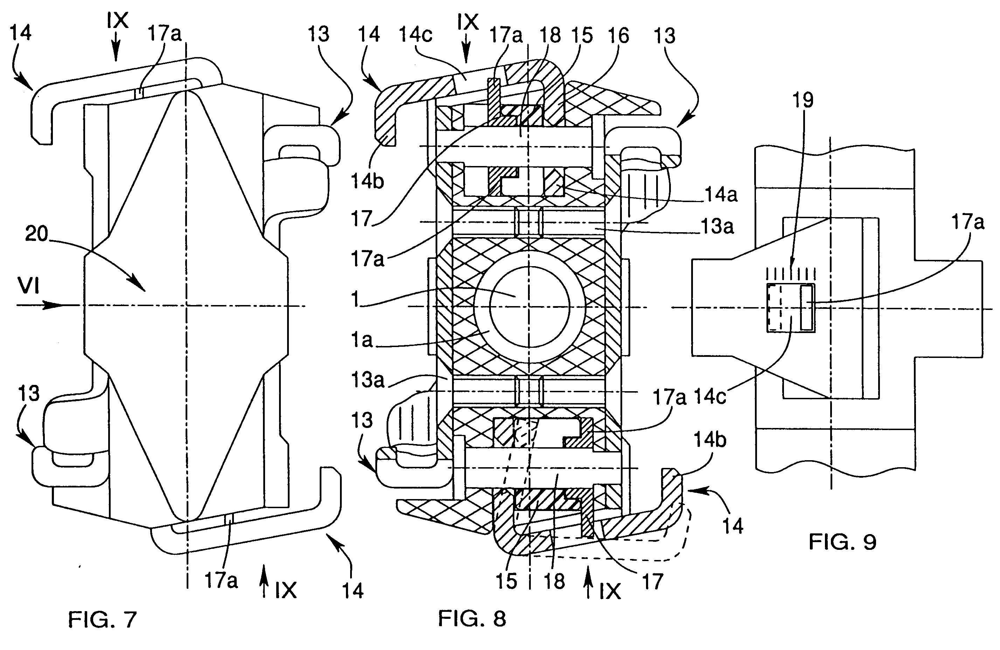

La plaquette 16 de compression du bloc d'élastomère se déplace en étant guidée par rapport au corps 20, de manière que le bloc d'élastomère ou de matière résiliente analogue soit comprimé selon une direction sensiblement parallèle au déplacement de la paroi 17 solidaire de la conformation mobile 14 d'enclenchement arrière. A cet effet, on prévoit que la conformation mobile 14 d'enclenchement arrière présente une section transversale sensiblement en U, dont une branche 14a constitue la paroi 16 au contact du bloc 15 d'élastomère et dont l'autre branche 14b constitue une griffe de retenue d'un taquet non représenté fixé sur une chaussure de cycliste. Ainsi, grâce à l'invention le bloc d'élastomère 15 est comprimé à la manière d'un accordéon, lorsque la griffe d'enclenchement 14b s'écarte sous la poussée de la chaussure du cycliste jusqu'à venir à la position représentée en traits pointillés sur la figure 8, tandis que dans la position correspondant à la retenue et au maintien du taquet et de la chaussure sur la pédale automatique, le bloc d'élastomère est comprimé sensiblement symétriquement selon les positions représentées en traits pleins sur les figures 5 à 8.

L'effet de levier est ainsi produit directement par la déformation en accordéon du bloc d'élastomère 15. Pour éviter une déformation excessive du bloc d'élastomère 15, on prévoit de préférence de monter le bloc d'élastomère 15 solidaire de la plaquette 17 et du taraudage ou écrou 17a, de manière à éviter tout déchaussement ou toute déformation indésirable.

Avantageusement, la paroi 17 déplaçable opposée à la paroi 16 de la conformation 14 mobile présentant une section transversale en U est repérable en position de manière reproductible. A cet effet, on prévoit que la paroi 17 présente une extrémité 17a qui s'engage dans une ouverture 14c pratiquée à la base de la conformation 14 en U. De préférence, comme représenté à la figure 9, l'orifice 14c est un orifice présentant deux bords opposés constituant des butées de réglage pour le déplacement de la plaquette 17 de compression et limitant ainsi les valeurs minimale et maximale de l'effort d'enclenchement. L'extrémité 17a est visible à travers l'orifice 14c et se déplace d'une position d'effort d'enclenchement minimal représentée en traits pointillés à une position d'effort d'enclenchement maximal représentée en traits pleins en restant constamment visible à travers l'orifice 14c et en fournissant ainsi une indication reproductible de l'effort d'enclenchement. Avantageusement, on prévoit une échelle graduée 19 sur le côté de l'orifice 14c pour permettre au cycliste de retrouver facilement un réglage d'effort d'enclenchement désiré. L'échelle 19 graduée adjacente à l'orifice 14c peut être gravée ou, alternativement, être réalisée sous forme d'une combinaison de plusieurs couleurs.

Pour réaliser l'ensemble comprenant la plaquette 17 et le bloc élastomère 15, il est avantageux de procéder par surmoulage ou vulcanisation d'une matière élastomère ou matière résiliente analogue (polyuréthanne ou équivalent) sur une plaquette usinée et taraudée préalablement au contour définitif.

Le bloc d'élastomère ou de matière résiliente présente également dans ce cas une caractéristique de dureté élevée supérieure à 70 Shore A, de manière à mettre la conformation mobile d'enclenchement constamment sous forte précontrainte sans que le bloc d'élastomère ne s'échauffe excessivement.

L'invention décrite en référence à deux modes de réalisations particuliers n'y est nullement limitée mais couvre au contraire toutes modifications de forme et toutes variantes de réalisation dans le cadre de l'invention impliquant la compression d'un bloc de matière résiliente et l'utilisation d'un effet de levier pour déterminer un effort d'enclenchement et un effort de retenue d'une conformation mobile d'enclenchement d'une pédale automatique. L'effet de levier peut être obtenu par un levier mécanique pivotant ou par une déformation non isotrope du bloc élastomère, par exemple une déformation en accordéon.

## Revendications

1. Pédale automatique de cycle, du type comportant une conformation fixe (3, 13) d'enclenchement avant destinée à enclencher l'extrémité avant d'un taquet fixé sur une chaussure de cycliste et une conformation mobile (4, 14) arrière destinée à enclencher l'extrémité arrière dudit taquet fixé sur ladite chaussure de cycliste ; ladite conformation mobile (4, 14) étant précontrainte par un moyen élastique (5, 15) de manière déplaçable sous la pression de la chaussure de cycliste entre une position ouverte d'écartement permettant l'insertion du taquet entre les deux conformations (3, 13 ; 4, 14) d'enclenchement et une position fermée d'enclenchement assurant la solidarisation du taquet et de la chaussure avec la pédale automatique, caractérisée en ce que le moyen élastique (5, 15) est un moyen à compression d'un bloc (5, 15) d'élastomère ou de matière résiliente analogue entre deux parois (6, 16 ; 7, 17) déplaçables l'une par rapport à l'autre de manière à permettre le réglage de l'effort d'enclenchement du taquet sur la pédale.

2. Pédale automatique selon la revendication 1, caractérisée en ce que la pédale est une pédale réversible comportant deux faces d'enclenchement.

3. Pédale automatique selon la revendication 1 ou la revendication 2, caractérisée en ce que la compression du bloc d'élastomère (5) est effectuée sensiblement parallèlement à l'axe (1) de montage de la pédale automatique sur le levier de pédalier.

4. Pédale automatique selon la revendication 1 ou la revendication 2, caractérisée en ce que la compression du bloc d'élastomère (15) est effectuée transversalement, de préférence sensiblement perpendiculairement, à l'axe (1) de montage de la pédale automatique sur le levier de pédalier.

5. Pédale automatique selon l'une quelconque des revendications précédentes, caractérisée en ce que la compression est effectuée sur un bloc plein (5) d'élastomère entre deux parois parallèles (6, 7) dont l'une est fixe (7) par rapport à la pédale automatique et dont l'autre (6) est déplaçable par actionnement d'une vis ou organe analogue (8) de réglage de l'effort d'enclenchement.

6. Pédale automatique selon l'une quelconque des revendications 1 à 4, caractérisée en ce que la compression est effectuée sur un bloc (15) percé d'élastomère entre deux parois parallèles (16, 17) dont l'une (16) est solidaire de la conformation mobile (14) d'enclenchement à l'arrière de la pédale automatique et dont l'autre (17) est mobile par rapport à la pédale automatique, et en ce qu'au moins une vis (18) ou organe analogue de réglage de l'effort d'enclenchement traverse le bloc (15) percé d'élastomère et assure sa compression par rapprochement ou éloignement des deux parois (16, 17).

7. Pédale automatique selon l'une quelconque des revendications 1 à 5, caractérisée en ce qu'un organe mobile (9) est en appui sur une paroi déplaçable (6) comprimant l'élastomère (5) ou matière résiliente analogue pour assurer le réglage de l'effort d'enclenchement.

8. Pédale automatique selon l'une quelconque des revendications 1 à 4, caractérisée en ce qu'un organe mobile, par exemple une vis (18) coopère avec une conformation coopérante, par exemple un écrou (17a) d'une paroi (17) déplaçable comprimant l'élastomère (15) ou matière résiliente analogue pour déplacer directement cette paroi déplaçable (17).

9. Pédale automatique selon la revendication 2, caractérisée en ce que la pédale comporte deux blocs (5) d'élastomère, chaque bloc d'élastomère (5) étant prévu pour déterminer l'effort d'enclenchement de chaque face d'enclenchement, et en ce que la pédale comporte un moyen unique (8, 9) de réglage assurant simultanément sensiblement le même taux de compression de chaque bloc (5) d'élastomère.

10. Pédale automatique selon la revendication 9, caractérisée en ce que le moyen unique (8, 9) de réglage comporte un étrier (9) à deux extrémités (10a, 10b) dont chacune et en appui sur une paroi (6) de compression d'un bloc (5) d'élastomère correspondant.

11. Pédale automatique selon la revendication 10, caractérisée en ce que ledit étrier (9) à deux extrémités (10a, 10b) est déplaçable sous l'action du vis (8) de réglage en appui central sur l'étrier (9).

12. Pédale automatique selon l'une des revendications précédentes, caractérisée en ce que le bloc d'élastomère (5) ou de matière résiliente analogue est comprimé selon une première direction par le déplacement desdites deux parois latérales (6, 7) et se dilate dans une deuxième direction sensiblement transversale à ladite première direction en exerçant un appui élastique sur un élément formant levier (11) de la conformation (4) d'enclenchement arrière.

13. Pédale automatique selon la revendication 12, caractérisée en ce que le bloc d'élastomère (5) est un bloc sensiblement parallélépipédique placé dans un logement de la pédale délimité par une paroi déplaçable (6) de compression et une paroi (7) solidaire de l'élément formant levier (11) de la conformation d'enclenchement (4) arrière.

14. Pédale automatique selon l'une des revendications précédentes, caractérisée en ce que le bloc (15) d'élastomères ou de matière résiliente analogue est comprimé par le déplacement des deux parois latérales (16, 17) selon une direction sensiblement parallèle au déplacement d'une paroi (17) solidaire de la conformation mobile (14) d'enclenchement arrière.

15. Pédale automatique selon la revendication (14), caractérisée en ce que la conformation mobile (14) d'enclenchement arrière présente une section transversale en U dont une branche (14a) constitue une paroi (16) au contact du bloc (15) d'élastomère et dont l'autre branche (14b) constitue une griffe de retenue de taquet.

16. Pédale automatique selon la revendication 15, caractérisée en ce que la conformation mobile (14) d'enclenchement arrière présente une ouverture (14c) avec deux bords opposés constituant des butées de réglage de l'effort d'enclenchement.

17. Pédale automatique selon la revendication 15, caractérisée en ce que la paroi (17) déplaçable opposée à la paroi (16) de la conformation en U au contact du bloc d'élastomère (15) est repérable en position de manière reproductible, de manière à fournir un réglage reproductible de l'effort d'enclenchement.

18. Pédale automatique selon la revendication 16, caractérisée en ce que la paroi (17) déplaçable opposée à la paroi (16) de la conformation en U au contact du bloc d'élastomère (15) présente une extrémité (17a) qui s'engage dans ladite ouverture (14c) en étant visible de l'extérieur.

19. Pédale automatique selon la revendication 18, caractérisée en ce que ladite extrémité (17a) est repérable par rapport à une échelle (19) graduée adjacente, solidaire de ladite ouverture (14c).

20. Pédale automatique selon l'une quelconque des revendications précédentes, caractérisée en ce que le bloc (5, 15) d'élastomère ou matière résiliente présente une caractéristique de dureté élevée supérieure à 70 Shore A, de manière à mettre la conformation (4, 14) mobile d'enclenchement constamment sous forte précontrainte sans que le bloc élastomère (5, 15) ne s'échauffe excessivement.

## Claims

1. Automatic cycle pedal of the type comprising a fixed front locking arrangement (3, 13) intended to lock the front end of a stop fixed to a cyclist's shoe and a mobile rear arrangement (4, 14) intended to lock the rear end of said stop fixed to said cyclist's shoe, said mobile arrangement (4, 14) being prestressed by an elastic means (5, 15) so as to be displaceable under the pressure of the cyclist's shoe between an open separating position allowing insertion of the stop between the two locking arrangements (3, 13; 4, 14) and a closed locking position assuring interlocking of the stop and the shoe with the automatic pedal,
characterised in that the elastic means (5, 15) is a means for compression of a block (5, 15) of elastomer or similar resilient material between two walls (6, 16; 7, 17) which are displaceable in relation to one another so as to allow adjustment of the locking action of the stop on the pedal.

2. Automatic pedal according to Claim 1, characterised in that the pedal is a reversible pedal comprising two locking faces.

3. Automatic pedal according to Claim 1 or Claim 2, characterised in that compression of the elastomer (5) block is effected essentially in parallel to the axis (1) of the assembly of the automatic pedal on the pedal lever.

4. Automatic pedal according to Claim 1 or Claim 2, characterised in that compression of the elastomer (15) block is effected transversely, preferably essentially perpendicularly, to the axis (1) of the assembly of the automatic pedal on the pedal lever.

5. Automatic pedal according to any one of the preceding claims, characterised in that the compression is effected on a plane block (5) of elastomer between two parallel walls (6, 7), one (7) of which is fixed in relation to the automatic pedal, and the other (6) is displaceable by operating a screw or similar adjusting element (8) for the locking action.

6. Automatic pedal according to any one of the preceding claims, characterised in that the compression is effected on a drilled block (15) of elastomer between two parallel walls (16, 17), one of which (16) is integral to the mobile locking arrangement (14) to the rear of the pedal, and the other (17) is mobile in relation to the automatic pedal, in that at least one screw (18) or similar adjusting element for the locking action passes through the drilled block (15) of elastomer and assures its compression by moving the two walls (16, 17) closer together or further apart.

7. Automatic pedal according to any one of Claims 1 to 5, characterised in that a mobile element (9) is supported on a displaceable wall (6) compressing the elastomer (5) or similar resilient material to ensure adjustment of the locking action.

8. Automatic pedal according to any one of Claims 1 to 4, characterised in that a mobile element, for example a screw (18), cooperates with a cooperating arrangement, for example a nut (17a), of a displaceable wall (17) compressing the elastomer (15) or similar resilient material for direct displacement of this displaceable wall (17).

9. Automatic pedal according to Claim 2, characterised in that the pedal comprises two blocks (5) of elastomer, each block of elastomer (5) being provided to govern the locking action of each locking face, and in that the pedal comprises a single adjusting means (8, 9) which simultaneously assures essentially the same rate of compression for each elastomer block (5).

10. Automatic pedal according to Claim 9, characterised in that the single adjusting means (8, 9) comprises a stirrup (9) with two ends (10a, 10b), each of which is supported on a compression wall (6) of a corresponding block of elastomer (5).

11. Automatic pedal according to Claim 10, characterised in that said stirrup (9) with two ends (10a, 10b) is displaceable under the action of the adjusting screw (8) supported centrally on the stirrup (9).

12. Automatic pedal according to one of the preceding claims, characterised in that the block of elastomer (5) or similar resilient material is compressed in a first direction by the displacement of said two lateral walls (6, 7) and expands in a second direction essentially transverse to said first direction forming an elastic support against an element forming a lever (11) of the rear locking arrangement (4).

13. Automatic pedal according to Claim 12, characterised in that the block of elastomer (5) is an essentially parallelepipedal block located in a housing of the pedal defined by a displaceable compression wall (6) and an integral wall (7) of the element forming a lever (11) of the rear locking arrangement (4).

14. Automatic pedal according to one of the preceding claims, characterised in that the block of elastomer (15) or similar resilient material is compressed by the displacement of the two lateral walls (16, 17) in a direction essentially parallel to the displacement of an integral wall (17) of the rear mobile locking arrangement (14).

15. Automatic pedal according to Claim 14, characterised in that the rear mobile locking arrangement (14) has a transverse U-shaped section, of which one arm (14a) forms a wall (16) touching the block of elastomer (15) and the other arm (14b) forms a stop retaining grip.

16. Automatic pedal according to Claim 15, characterised in that the rear mobile locking arrangement (14) has an opening (14c) with two opposing edges forming abutments for adjusting the locking action.

17. Automatic pedal according to Claim 15, characterised in that the displaceable wall (17) opposite the wall (16) of the U-shaped arrangement touching the block of elastomer (15) may be positioned in a reproducible manner in order to provide a reproducible adjustment of the locking action.

18. Automatic pedal according to Claim 16, characterised in that the displaceable wall (17) opposite the wall (16) of the U-shaped arrangement touching the block of elastomer (15) has an end (17a) which engages into said opening (14c) becoming visible to the outside.

19. Automatic pedal according to Claim 18, characterised in that said end (17a) may be positioned in relation to an adjacent graduated scale (19) integral to said opening (14c).

20. Automatic pedal according to one of the preceding claims, characterised in that the block of elastomer (5, 15) or similar resilient material has an elevated hardness characteristic greater than 70 Shore A, in order to place the mobile locking arrangement (4, 14) constantly under intense prestress without the block of elastomer (5, 15) becoming excessively heated.

## Patentansprüche

1. Automatisches Pedal für ein Fahrrad, wobei eine feste vordere einrastende Vorrichtung (3,13) zum Befestigen des vorderen Endes eines am Schuh des Fahrradfahrers angeordneten Anschlags, und eine bewegliche hintere Vorrichtung (4, 14) zum Befestigen des hinteren Endes des Anschlags des Schuhs des Fahrradfahrers vorgesehen ist; wobei die bewegliche hintere Vorrichtung (4, 14) durch ein elastisches Mittel (5, 15) derart vorgespannt ist, daß sie unter dem Druck des Schuhs des Fahrradfahrers zwischen einer geöffneten Spreizstellung, die das Einführen des Anschlags zwischen die beiden Vorrichtungen (3, 13; 4, 14) zum Befestigen gestattet, und einer geschlossenen Befestigungsstellung, die die Verbindung des Anschlags und des Schuhs mit der automatischen Pedale sicherstellt, verschieblich ist, **dadurch gekennzeichnet,** daß das elastische Mittel (5, 15) ein Mittel der Kompression eines Blocks (5, 15) aus Elastomerwerkstoff oder aus vergleichbarem elastischen Werkstoff zwischen zwei relativ zueinander verschieblichen Wandungsteilen (6, 16; 7, 17) derart ist, daß das Einstellen der Befestigungskraft des Anschlags auf der Pedale gestatten wird.

2. Automatisches Pedal nach Anspruch 1, **dadurch gekennzeichnet,** daß das Pedal ein umkehrbares Pedal mit zwei Befestigungsflächen ist.

3. Automatisches Pedal nach Anspruch 1 oder 2, **dadurch gekennzeichnet,** daß die Kompression des Blocks aus Elastomerwerkstoff (5) vorzugsweise parallel zu der Achse (1) für die Montage des automatischen Pedals auf dem Hebel des Tretlagers erfolgt.

4. Automatisches Pedal nach Anspruch 1 oder **dadurch gekennzeichnet,** daß die Kompression des Blocks aus Elastomerwerkstoff (15) quer, vorzugsweise etwa senkrecht, zu der Achse (1) für die Montage des automatischen Pedals auf dem Hebel des Tretlagers erfolgt.

5. Automatisches Pedal nach einem der vorangehenden Ansprüche, **dadurch gekennzeichnet,** daß die Kompression eines massiven Blocks (5) aus Elastomerwerkstoff zwischen zwei parallelen Wandungsteilen (6, 7) erfolgt, von denen einer (7) relativ zu dem automatischen Pedal fest und der andere (6) durch Betätigung einer Schraube oder eines vergleichbaren Elements (8) zum Einstellen der Befestigungskraft verschieblich ist.

6. Automatisches Pedal nach einem der Ansprüche 1 bis 4, **dadurch gekennzeichnet,** daß die Kompression eines durchbrochenen Blocks (15) aus Elastomerwerkstoff zwischen zwei parallelen Wandungsteilen (16, 17) erfolgt, von denen einer (16) im hinteren Bereich des automatischen Pedals mit der beweglichen hinteren Vorrichtung (14) zum Befestigen verbunden ist, und der andere (17) relativ zu der automatischen Pedale verschieblich ist, und daß mindestens eine Schraube (18) oder ein vergleichbares Element zum Einstellen der Befestigungskraft quer zu dem durchbrochenen Block (15) aus Elastomerwerkstoff vorgesehen ist, und seine Kompression durch Annähern oder Entfernen der beiden Wandungsteile (16, 17) sicherstellt.

7. Automatisches Pedal nach einem der Ansprüche 1 bis 5, **dadurch gekennzeichnet,** daß ein verschiebliches Element (9) auf einem verschieblichen Wandungsteil (6) gelagert ist und den Elastomerwerkstoff (5) oder den vergleichbaren elastischen Werkstoff komprimiert, um die Einstellbarkeit der Befestigungskraft zu sichern.

8. Automatisches Pedal nach einem der Ansprüche 1 bis 4, **dadurch gekennzeichnet,** daß ein verschiebliches Element (9), beispielsweise eine Schraube (18), mit einem Gegenstück zusammenarbeitet, zum Beispiel einer Mutter (17a) eines verschieblichen Wandungsteils (17), der den Elastomerwerkstoff (15) oder den vergleichbaren elastischen Werkstoff komprimiert, um den verschieblichen Wandungsteil (17) direkt zu verschieben.

9. Automatisches Pedal nach Anspruch 2, **dadurch gekennzeichnet,** daß das Pedal zwei Blöcke (5) aus Elastomerwerkstoff aufweist, wobei jeder Block aus Elastomerwerkstoff (5) vorgesehen ist, um die Befestigungskraft jeder Befestigungsfläche zu bestimmen, und daß das Pedal ein gemeinsames Mittel (8, 9) zum Einstellen aufweist, das gleichzeitig vorzugsweise denselben Verdichtungsgrad der Blöcke (5) aus Elastomerwerkstoff sicherstellt.

10. Automatisches Pedal nach Anspruch 9, **dadurch gekennzeichnet,** daß das gemeinsame Mittel (8, 9) zum Einstellen eine Klammer (9) mit zwei Enden (10a, 10b) aufweist, von denen jedes auf einem Wandungsteil (6) für die Kompression eines entsprechenden Blocks (5) aus Elastomerwerkstoff gelagert ist.

11. Automatisches Pedal nach Anspruch 10, **dadurch gekennzeichnet**, daß die Klammer (9) mit zwei Enden (10a, 10b) durch Betätigung der zentrisch in der Klammer gelagerten Schraube (8) zum Einstellen verschieblich ist.

12. Automatisches Pedal nach einem der vorangehenden Ansprüche, **dadurch gekennzeichnet,** daß der Block aus Elastomerwerkstoff (5) oder aus einem vergleichbaren elastischen Werkstoff durch das Verschieben der beiden seitlichen Wandungsteile (6, 7) in einer ersten Richtung komprimiert wird, und er sich in einer zweiten Richtung ausdehnt, die etwa quer zu der ersten Richtung verläuft, indem er elastisch einen Druck auf ein einen Hebel (11) der Vorrichtung (4) bildendes Element der hinteren einrastenden Vorrichtung (4) ausübt.

13. Automatisches Pedal nach Anspruch 12, **dadurch gekennzeichnet,** daß der Block aus Elastomerwerkstoff (5) ein etwa parallelepipedförmiger, in einem Sitz der Pedale angeordneter Block ist, der durch einen verschieblichen Wandungsteil (6) für die Kompression und durch einen Wandungsteil (7) begrenzt wird, der mit dem den Hebel (11) der hinteren Vorrichtung zum Befestigen (4) formenden Element verbunden ist.

14. Automatisches Pedal nach einem der vorangehenden Ansprüche, **dadurch gekennzeichnet,** daß der Block (15) aus Elastomerwerkstoff oder aus einem vergleichbaren elastischen Werkstoff durch das Verschieben der beiden seitlichen Wandungsteile (16, 17) in einer ersten Richtung komprimiert wird, die etwa parallel zu der Verschiebung des mit der beweglichen hinteren Vorrichtung (14) zum Befestigen verbundenen Wandungsteils (17) verläuft.

15. Automatisches Pedal nach Anspruch 14, **dadurch gekennzeichnet,** daß die bewegliche hintere Vorrichtung (14) zum Befestigen einen Querbereich in Form eines U aufweist, von dem ein Abschnitt (14a) einen mit dem Block (15) aus Elastomerwerkstoff in Kontakt stehenden Wandungsteil (16) bildet, und von dem der andere Abschnitt (14b) einen Rückziehhaken des Anschlags bildet.

16. Automatisches Pedal nach Anspruch 15, **dadurch gekennzeichnet,** daß die bewegliche hintere Vorrichtung (14) zum Befestigen eine Öffnung (14c) mit zwei gegenüberliegenden Rändern aufweist, die einen Stop zum Einstellen der Befestigungskraft bilden.

17. Automatisches Pedal nach Anspruch 15, **dadurch gekennzeichnet,** daß der gegenüber dem Wandungsteil (16) der Vorrichtung in Form eines U verschiebliche Wandungsteil (17) beim Kontakt mit dem Block aus Elastomerwerkstoff (15) in derart in wiederholbarer Weise positionierbar ist, daß eine wiederholbare Einstellung der Befestigungskraft bereitgestellt wird.

18. Automatisches Pedal nach Anspruch 16, **dadurch gekennzeichnet,** daß der gegenüber dem Wandungsteil (16) der Vorrichtung in Form eines U verschiebliche Wandungsteil (17) beim Kontakt mit dem Block aus Elastomerwerkstoff (15) ein Ende (17a) aufweist, das in die Öffnung (14c) eingreift und von außen sichtbar ist.

19. Automatisches Pedal nach Anspruch 18, **dadurch gekennzeichnet,** daß das Ende (17a) relativ zu einer benachbarten, an der Öffnung (14c) angeordneten, unterteilten Skala (19) positionierbar ist.

20. Automatisches Pedal nach einem der vorangehenden Ansprüche, **dadurch gekennzeichnet,** daß der Block (5,15) aus Elastomerwerkstoff oder aus einem elastischen Werkstoff eine vergrößerte Härte von mehr als 70 Shore A derart aufweist, daß die bewegliche Vorrichtung (4, 14) zum Befestigen andauernd unter starker Vorspannung gehalten wird, ohne, daß eine übermäßige Erwärmung des Blocks aus Elastomerwerkstoff (5, 15) erfolgt.
